# EUROPÄISCHE PATENTSCHRIFT

(11) **EP 1 574 779 B1**
(45) Veröffentlichungstag und Bekanntmachung des Hinweises auf die Patenterteilung: **05.11.2008**
(21) Anmeldenummer: 05003750.6
(22) Anmeldetag: 22.02.2005
(51) Int. Cl.: F21V 7/00, F21S 8/10, B60Q 1/26

(54) **Rückstrahler für Heckleuchten von Fahrzeugen, vorzugsweise von Kraftfahrzeugen**
Reflex reflector for tail-lights of vehicles
Réflecteur pour feux arrières de véhicule

(30) Priorität: 10.03.2004 DE 102004011600
(43) Veröffentlichungstag der Anmeldung: 14.09.2005
(73) Patentinhaber: odelo GmbH, 71409 Schwaikheim (DE)
(72) Erfinder: Erber, Andreas, 73760 Ostfildern (DE)
(74) Vertreter: Jackisch-Kohl, Anna-Katharina

(56) Entgegenhaltungen:
- EP-A- 0 974 485
- DE-A1- 3 929 955
- DE-A1- 10 019 557
- DE-A1- 10 160 052

## Beschreibung

Die Erfindung betrifft einen Rückstrahler für Heckleuchten von Fahrzeugen, vorzugsweise von Kraftfahrzeugen, nach dem Oberbegriff des Anspruches 1.

Es sind Heckleuchten bekannt, bei denen die verschiedenen Leuchtenfunktionen, wie Bremslicht oder Blinklicht, kreisförmig genutzt werden. Der Aufbau solcher Heckleuchten ist häufig für den vorgesehenen Einsatzfall nicht zweckmäßig.

Beim gattungsgemäßen Rückstrahler (DE-A-101 60 052) umgibt der Reflektorring einen zylindrischen Träger. An seiner äußeren Mantelfläche sind über den Umfang verteilt die Leuchtmittel in Form von LEDs befestigt. Das von ihnen ausgesandte Licht wird am Reflektorring zu einer Lichtscheibe reflektiert, durch die die Strahlen nach außen treten. Zentrisch in der Lichtscheibe ist ein Rückstrahlerelement vorgesehen. Aufgrund der zylinderförmigen Gestaltung des Trägers weist der Rückstrahler eine verhältnismäßig große Bautiefe auf.

Bei einem anderen bekannten Rückstrahler (DE-A-100 19 557) umgibt der Reflektorring mit Abstand ein Rückstrahlerelement, das streifen- oder rinnenförmig ausgebildet ist. Unterhalb des Rückstrahlerelementes befinden sich Leuchtmittel in Form von LEDs, deren Strahlen zum Reflektorring gelangen, der sie zu einer Lichtscheibe reflektiert, durch welche die Strahlen nach außen treten. Auch dieser Rückstrahler baut verhältnismäßig tief.

Der Erfindung liegt die Aufgabe zugrunde, den gattungsgemäßen Rückstrahler so auszubilden, daß er bei flacher Bauweise optimal an den gewünschten Einsatzzweck angepaßt werden kann.

Diese Aufgabe wird beim gattungsgemäßen Rückstrahler erfindungsgemäß mit den kennzeichnenden Merkmalen des Anspruches 1 gelöst.

Beim erfindungsgemäßen Rückstrahler sind die Leuchtmittel quer zu ihrer Strahlrichtung abgedeckt, so daß das von ihnen ausgesandte Licht nicht direkt nach außen gelangt, sondern infolge der Abdeckung in Richtung auf den Reflektorring gelenkt wird. Dadurch wird in konstruktiv einfacher Weise sichergestellt, daß das von den Leuchtmitteln ausgesandte Licht zuverlässig nach außen aus der Heckleuchte gelangt. Infolge der Abdeckung können die Leuchtmittel hinsichtlich ihrer Leuchtenfunktion optimal eingesetzt werden. Der Abdeckungsbereich selbst kann für eine weitere Leuchtenfunktion eingesetzt werden, so beispielsweise für eine Rückstrahlerfunktion. Da der Träger und das Rückstrahlerelement jeweils als flache Ringscheiben ausgebildet sind, baut der erfindungsgemäße Rückstrahler sehr flach. Hierzu trägt bei, daß die Leuchtmittel an der Breitseite der Trägerringscheibe vorgesehen sind.

Weitere Merkmale der Erfindung ergeben sich aus den weiteren Ansprüchen, der Beschreibung und den Zeichnungen.

Die Erfindung wird anhand einiger in den Zeichnungen dargestellter Ausführungsformen näher erläutert. Es zeigen
- Fig. 1: im Axialschnitt einen Teil eines erfindungsgemäßen Rückstrahlers,
- Fig. 2: in einer Darstellung entsprechend Fig. 1 eine zweite Ausführungsform eines erfindungsgemäßen Rückstrahlers,
- Fig. 3: in vergrößerter Darstellung einen Teil des Rückstrahlers gemäß Fig. 2,
- Fig. 4 bis Fig. 8: jeweils in Darstellungen entsprechend Fig. 1 weitere Ausführungsformen von erfindungsgemäßen Rückstrahlern.

Die im folgenden beschriebenen Rückstrahler werden in Heckleuchten von Kraftfahrzeugen eingesetzt.

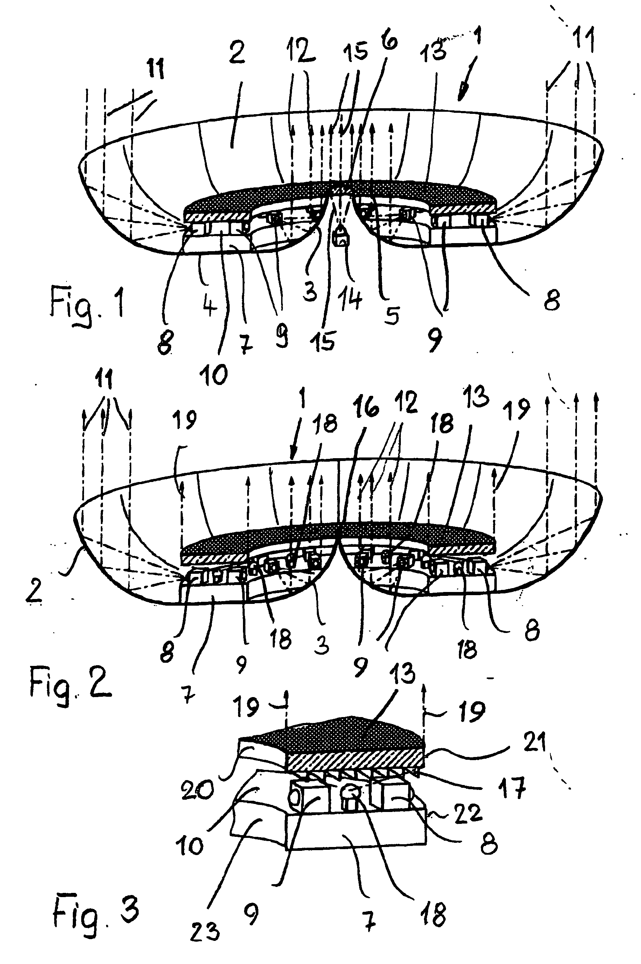

Der Rückstrahler gemäß Fig. 1 hat einen im Querschnitt asymmetrischen Ringreflektor 1. Mit ihm werden in noch zu beschreibender Weise die von Leuchtmitteln ausgesandten Strahlen nach außen reflektiert. Die radial äußere Ringwand 2 des Reflektors 1 ist höher als die radial innere Ringwand 3. Die beiden gekrümmt verlaufenden Ringwände 2, 3 gehen über einen ringförmigen ebenen Boden 4 ineinander über. Die beiden Ringwände 2, 3 sind jeweils vorteilhaft als Paraboloidflächen ausgebildet. Je nach Einsatzfall des Rückstrahlers können die Ringwände 2, 3 auch andere Gestaltung haben. Die innere Ringwand 3 schließt mit ihrem freien Rand 5 an eine zentrale ebene Kreisfläche 6 an, die lichtdurchlässig ausgebildet ist.

Auf dem Ringboden 4 ist ein flacher Trägerring 7 befestigt, der über seinen Umfang verteilt Leuchtmittel 8, 9 trägt, die vorzugsweise LEDs sind. Die Leuchtmittel 8 sind nahe dem radial äußeren Rand 22 und die Leuchtmittel 9 nahe dem radial innen liegenden Ringrand 23 auf der Oberseite 10 des Trägerringes 7 befestigt. Vorteilhaft liegen die Leuchtmittel 8, 9 am äußeren und inneren Rand 22, 23 des Trägerringes 7 jeweils radial einander gegenüber. Die Leuchtmittel 8 am radial äußeren Rand 22 des Trägerringes 7 strahlen in Richtung auf die Ringwand 2, während die am radial inneren Rand 23 befindlichen Leuchtmittel 9 in Richtung auf die innere Ringwand 3 abstrahlen. An den beiden Ringwänden 2, 3 werden die Strahlen 11, 12 parallel zueinander nach außen reflektiert.

Die Leuchtmittel 8, 9 liegen unterhalb eines flachen Rückstrahlerringes 13, der die Leuchtmittel in Richtung auf die Austrittsseite abdeckt. Das von den Leuchtmitteln 8, 9 abgestrahlte Licht kann somit nur am Rückstrahlerring 13 vorbei nach außen gelangen.

Der Rückstrahlerring 13 ist unmittelbar auf den Gehäusen der Leuchtmittel 8, 9 befestigt, so daß zusätzliche Halterungen für den Rückstrahlerring 13 nicht notwendig sind.

Die radial innere Ringwand 3 überragt den Rückstrahlerring 13, der mit Abstand von der äußeren und der inneren Ringwand 2, 3 liegt.

Im Bereich unterhalb der Kreisfläche 6 ist der Ringreflektor 1 trichterförmig ausgebildet. In diesem Bereich ist wenigstens ein Leuchtmittel 14, vorzugsweise eine LED, untergebracht, die in Richtung auf die Kreisfläche 6 strahlt. Die vom Leuchtmittel 14 ausgesandten Strahlen 15 treten durch die Kreisfläche 6 hindurch, an der sie so gebrochen werden, daß die Strahlen nach ihrem Durchtritt durch die Kreisfläche 6 parallel zu den reflektierten Strahlen 11, 12 verlaufen.

Die Leuchtmittel 8, 9 sind 90°-LEDs, die sich einfach auf dem Trägerring 7 montieren lassen. Auch der Rückstrahlerring 13 läßt sich auf den 90°-LEDs 8, 9 einfach befestigen. Der Trägerring 7 ist geringfügig dicker als der Rückstrahlerring 13. Beide Ringe 7, 13 haben gleiche radiale Breite, so daß sie, in Achsansicht des Rückstrahlers gesehen, deckungsgleich liegen. Auf dem ebenen Boden 4 des Ringreflektors 1 läßt sich der Trägerring 7 mit seiner ebenen Unterseite ebenfalls einfach und sicher befestigen.

Beim Ausführungsbeispiel nach den Fig. 2 und 3 ist die radial innere Ringwand 3 so ausgebildet, daß sie in einer zentralen Spitze 16 endet. Im Unterschied zum Ausführungsbeispiel nach Fig. 1 ist somit im Zentrum des Ringreflektors 1 keine Lichtdurchtrittsfläche vorgesehen. Dementsprechend ist bei der Ausführungsform nach den Fig. 2 und 3 auch das zentrische Leuchtmittel 14 nicht vorgesehen.

Die Leuchtmittel 8, 9 auf dem Trägerring 7 sind in gleicher Weise angeordnet wie beim Ausführungsbeispiel nach Fig. 1. Die von den Leuchtmitteln 8, 9 ausgesandten Strahlen verlaufen entgegengesetzt zueinander und werden an der inneren und der äußeren Ringwand 2, 3 des Ringreflektors 1 parallel zueinander nach außen reflektiert.

Der Rückstrahlerring 13 liegt im Unterschied zur vorigen Ausführungsform mit Abstand oberhalb der Leuchtmittel 8, 9. Zur Halterung des Rückstrahlerringes 13 sind zusätzliche (nicht dargestellte) Befestigungsmittel vorgesehen, mit denen der Rückstrahlerring 13 auf dem Trägerring 7 abgestützt ist.

An der dem Trägerring 7 zugewandten Unterseite ist der Rückstrahlerring 13 mit einer Fresnellinsenstruktur 17 versehen (Fig. 3). Dieser Linsenstruktur 17 zugeordnet sind Leuchtmittel 18, vorzugsweise LEDs, die im Bereich zwischen den äußeren und inneren Leuchtmitteln 8, 9 auf dem Trägerring 7 vorgesehen sind. Über den Umfang des Trägerringes 7 sind die Leuchtmittel 18 gleichmäßig verteilt angeordnet. Das von ihnen ausgesandte Licht trifft auf die Fresnellinsenstruktur 17, durch die die Strahlen 19 so geleitet werden, daß sie am inneren und am äußeren Rand 20, 21 des Rückstrahlerringes 13 parallel zu den Strahlen 11, 12 aus dem Rückstrahler nach außen treten.

Die Fresnellinsenstruktur 17 ist über den Umfang und über die radiale Breite des Rückstrahlerringes 13 vorgesehen, der im übrigen gleich ausgebildet ist wie beim vorigen Ausführungsbeispiel.

Bei den Ausführungsbeispielen nach den Fig. 1 bis 3 strahlen die Leuchtmittel 8, 9, die sich zwischen dem Trägerring 7 und dem Rückstrahlerring 13 befinden, die Strahlen 11, 12 entgegengesetzt zueinander und parallel zur Oberseite 10 des Trägerringes 7 radial nach innen und nach außen ab. Die Leuchtmittel 8, 9 haben geringen Abstand vom äußeren und inneren Rand 22, 23 des Trägerringes 7 und liegen jeweils auf gleicher Höhe. Die Leuchtmittel 8, 9 können selbstverständlich auch versetzt relativ zueinander angeordnet sein, insbesondere auf Lücke zueinander, in Radialrichtung gesehen. Der Trägerring 7 wird durch eine ringförmige Platine für die auf ihr sitzenden Leuchtmittel 8, 9, 14 gebildet.

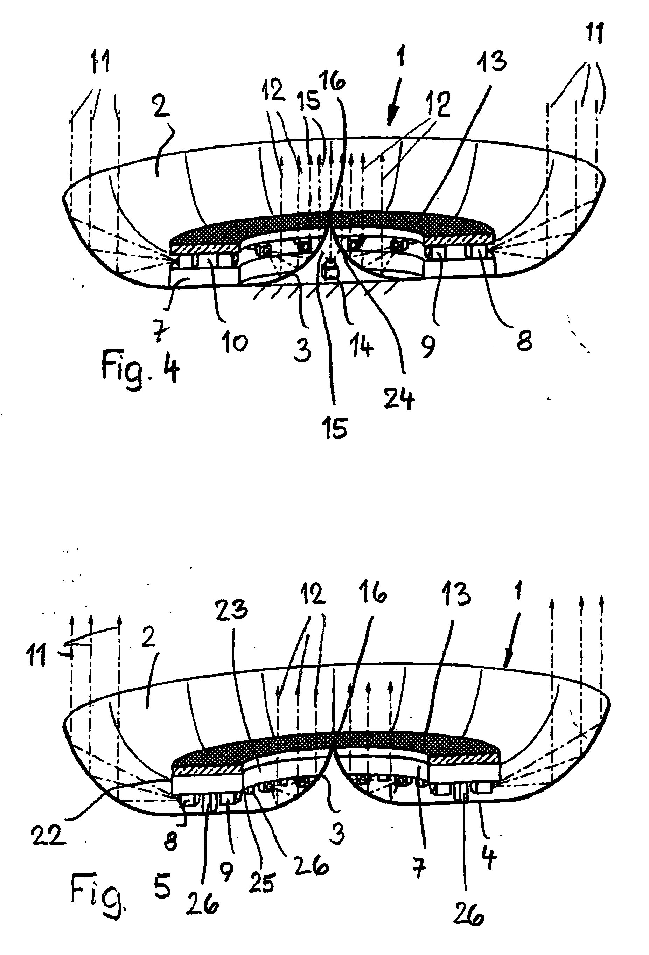

Das Ausführungsbeispiel nach Fig. 4 bildet eine Kombination der Ausführungsformen nach den Fig. 1 bis 3. Die innere Ringwand 3 des Ringreflektors 1 läuft in der Spitze 16 zusammen, die zentrisch im Ringreflektor 1 angeordnet ist und über den Rückstrahlerring 13 ragt. Er sitzt auf den Leuchtmitteln 8, 9 entsprechend der Ausführungsform nach Fig. 1. Die Leuchtmittel 8, 9 sind wiederum vorteilhaft als 90°-LEDs ausgebildet, auf denen der Rückstrahlerring 13 befestigt ist. Die Leuchtmittel 8, 9 strahlen entgegengesetzt zueinander parallel zur Oberseite 10 des Trägerringes 7 ihr Licht ab. An der äußeren und an der inneren Ringwand 3 werden die Strahlen 11, 12 parallel zueinander nach außen reflektiert.

Im mittleren Bereich unterhalb der Spitze 16 ist das Leuchtmittel 14 untergebracht, das ebenfalls vorteilhaft eine 90°-LED ist. Das von ihr ausgesandte Licht 15 trifft auf die Außenseite der Ringwand 3. Sie ist in dem von den Lichtstrahlen 15 erfaßten Bereich 24 transparent oder teiltransparent ausgebildet. Dadurch können die vom Leuchtmittel 14 ausgesandten Strahlen durch diesen Teilbereich 24 hindurchtreten. Hierbei werden die Strahlen 15 so gebrochen, daß sie parallel zu den reflektierten Strahlen 11, 12 nach außen abgestrahlt werden. Im übrigen ist diese Ausführungsform gleich ausgebildet wie das Ausführungsbeispiel nach Fig. 1.

Die Ausführungsform gemäß Fig. 5 unterscheidet sich vom Ausführungsbeispiel nach Fig. 4 dadurch, daß die Leuchtmittel 8, 9 an der Unterseite 25 des Trägerringes 7 befestigt sind. Er hat im Unterschied zu den vorigen Ausführungsbeispielen somit Abstand vom Ringboden 4 des Ringreflektors 1. Zur Befestigung des Trägerringes 7 auf dem Ringboden 4 sind in gleichmäßigen Abständen Stege 26 vorgesehen, mit denen der Trägerring 7 auf dem Ringboden 4 gehalten ist. Auf dem Trägerring 7 liegt der Rückstrahlerring 13 unmittelbar auf, der gleiche radiale Breite wie der Trägerring 7 hat.

Die Leuchtmittel 8, 9 sind wiederum vorteilhaft 90°-LEDs, die mit geringem Abstand vom Außen- und Innenrand 22, 23 gleichmäßig verteilt über den Umfang des Trägerringes 7 angeordnet sind. Wie bei den vorigen Ausführungsbeispielen strahlen die Leuchtmittel 8, 9 in entgegengesetzten Richtungen radial nach außen und nach innen ab. Die von ihnen ausgesandten Strahlen 11, 12 werden an der äußeren und an der inneren Ringwand 2, 3 des Ringreflektors 1 parallel zueinander nach außen reflektiert. Die innere Ringwand 3 endet in der zentralen Spitze 16, die geringfügig über den Rückstrahlerring 13 ragt. Im Unterschied zum Ausführungsbeispiel nach Fig. 4 ist der zentrale Bereich der inneren Ringwand 3 lichtundurchlässig ausgebildet.

Wie bei den vorigen Ausführungsformen erzeugen die Strahlen 11, 12 zwei koaxial zueinander liegende Strahlenringe, die aus dem Rückstrahler austreten. Die beiden Strahlenringe werden durch den Rückstrahlerring 13 voneinander getrennt. Die Leuchtmittel 8, 9 liegen, in Radialrichtung gesehen, jeweils hintereinander. Es ist aber auch möglich, die Leuchtmittel 8 und 9 versetzt zueinander, insbesondere auf Lücke zueinander, anzuordnen, in radialer Richtung gesehen.

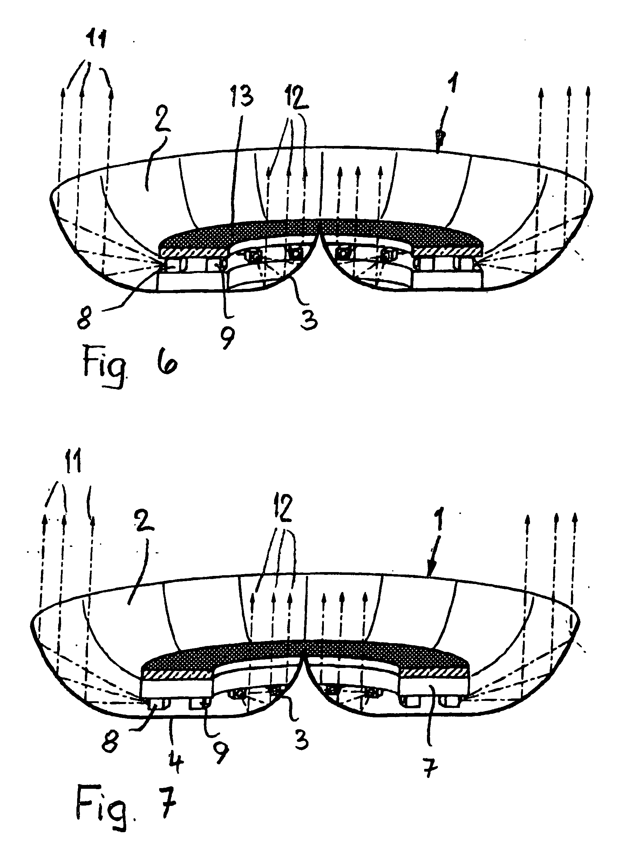

Der Rückstrahler gemäß Fig. 6 unterscheidet sich vom Rückstrahler nach Fig. 4 lediglich dadurch, daß das zentrale Leuchtmittel 14 nicht vorhanden ist. Dementsprechend ist der zentrale Bereich der inneren Ringwand 3 des Ringreflektors 1 lichtundurchlässig ausgebildet. Im übrigen ist der Rückstrahler nach Fig. 6 gleich ausgebildet wie das Ausführungsbeispiel nach Fig. 4. Die von den Leuchtmitteln 8, 9 ausgesandten Strahlen 11, 12 werden an der äußeren und an der inneren Ringwand 2, 3 parallel zueinander nach außen reflektiert. Dadurch entstehen entsprechend den vorigen Ausführungsformen zwei Strahlenringe, die durch den Rückstrahlerring 13 voneinander getrennt sind.

Fig. 7 zeigt einen Rückstrahler, der sich vom Rückstrahler nach Fig. 5 lediglich dadurch unterscheidet, daß der Trägerring 7 über die Leuchtmittel 8, 9 auf dem Ringboden 4 des Reflektorringes 1 befestigt ist. Im übrigen ist der Rückstrahler nach Fig. 7 gleich ausgebildet wie das Ausführungsbeispiel nach Fig. 5. Die von den Leuchtmitteln 8, 9 ausgesandten Strahlen 11, 12 werden an der äußeren und an der inneren Ringwand 2, 3 des Ringreflektors 1 parallel zueinander nach außen reflektiert.

Bei sämtlichen Ausführungsformen können die Leuchtmittel 8, 9, 14, 18 auch wenigstens teilweise durch Glühlampen oder dergleichen gebildet sein.

Es ist möglich, zwei oder mehr solcher Rückstrahler nebeneinander beispielsweise in Reihe oder in Ringform anzuordnen. Dadurch kann die Heckleuchte des Kraftfahrzeuges sehr einfach an unterschiedliche Leuchtanforderungen angepaßt werden.

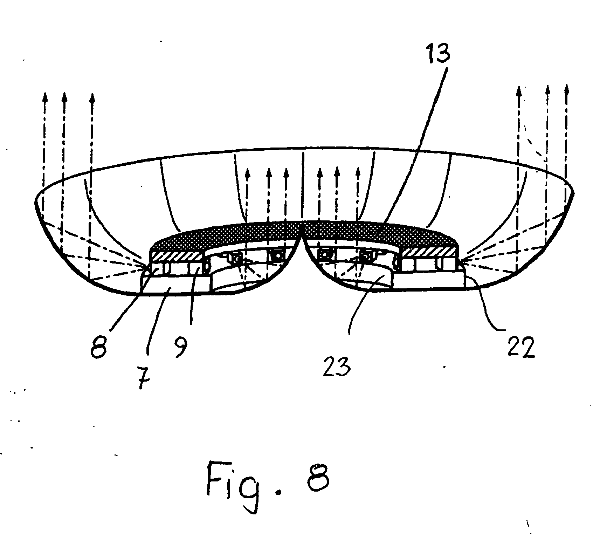

Bei Verwendung von 90°-LEDs als Leuchtmittel ist eine einfache Platinenbauweise möglich. Sie kann, wie bei den dargestellten Ausführungsbeispielen, durch den ebenen dünnen Trägerring 7 gebildet sein. Der Rückstrahlerring 13 kann schmaler als der Trägerring 7 ausgebildet sein. Eine solche Ausbildung zeigt Fig. 8. Der Rückstrahlerring 13 ist so breit, daß er die Leuchtmittel 8, 9 abdeckt, die mit Abstand vom inneren und äußeren Rand 22, 23 des Trägerringes 7 liegen. Diese Ausführungsform ist im übrigen gleich ausgebildet wie das Ausführungsbeispiel gemäß Fig. 6.

Die Leuchtmittel 8, 9 können aber auch am äußeren und inneren Rand 22, 23 des Trägerringes 7 angeordnet sein, so daß sie vom Rückstrahlerring 13 nicht oder nur teilweise abgedeckt werden. Auch kann der Rückstrahlerring 13 so schmal sein, daß er die mit Abstand zum äußeren und inneren Rand 22, 23 des Trägerringes 7 liegenden Leuchtmittel 8, 9 nicht oder nur teilweise abdeckt. In diesem Fall ist der Rückstrahlerring 13 in geeigneter Weise, beispielsweise durch Stege, auf dem Trägerring 7 befestigt. Innerhalb der Heckleuchte des Kraftfahrzeuges sind die nicht oder nur teilweise abgedeckten Leuchtmittel als Leuchtpunktkranz sichtbar.

Wie anhand des Ausführungsbeispieles nach Fig. 4 erläutert, kann der zentrale Bereich 24 der inneren Ringwand 3 durchscheinend ausgebildet sein. Dies kann dadurch erreicht werden, daß die Innenseite der Ringwand 3 in diesem Bereich nur teilbedampft oder auch nur segmentartig bedampft ist. Dann kann das von dem unterhalb der Spitze 16 befindlichen Leuchtmittel 14 ausgesandte Licht durch diesen Bereich 24 der Ringwand 3 hindurchtreten. Das Leuchtmittel 14 kann auch in die Ringwand 3 eingespritzt sein.

Anstelle des als LED-Platine dienenden Trägerringes 7 kann auch ein Lichtleiter eingesetzt werden, für den dann beispielsweise nur ein einziges Leuchtmittel erforderlich ist. Durch entsprechende Strukturen in einem solchen Lichtleiter wird dann das von diesem Leuchtmittel ausgesandte Licht vom Lichtleiter nach außen in Richtung auf die äußere und die innere Ringwand 2, 3 gebrochen.

Die Leuchtmittel 8, 9, 14, 18 können gleichfarbiges Licht abstrahlen. Es ist auch möglich, daß die unterschiedlichen Leuchtmittel unterschiedlich farbiges Licht abstrahlen. Statt dessen können auch die Reflektorflächen der Ringwände 2, 3 unterschiedlich eingefärbt sein, so daß unterschiedlich farbiges Licht nach außen abgestrahlt wird.

Die unterschiedlichen Leuchtmittel können unterschiedlichen Signalfunktionen zugeordnet sein. Wird der Rückstrahler in einer Heckleuchte eingesetzt, können die verschiedenen Leuchtmittel beispielsweise eine Blinkfunktion, eine Bremslichtfunktion oder eine Schlußlichtfunktion erfüllen. Dementsprechend sind die verschiedenen Leuchtmittel über die Platine 7 entsprechend ansteuerbar.

## Patentansprüche

1. Rückstrahler für Heckleuchten von Fahrzeugen, vorzugsweise von Kraftfahrzeugen, mit etwa radial abstrahlenden Leuchtmitteln (8, 9), vorzugsweise LEDs, die an einem ringförmigen Träger (7) vorgesehen sind, deren Strahlen (11) von einem Reflektorring (1) nach außen reflektiert werden und die quer zu ihrer Strahlrichtung wenigstens teilweise abgedeckt sind, und mit einem Rückstrahlerelement (13), **dadurch gekennzeichnet, daß** der Träger (7) und das Rückstrahlerelement (13) als flache Ringscheiben ausgebildet sind, und daß die Leuchtmittel (8, 9) an einer Breitseite der Trägerringscheibe (7) vorgesehen sind.

2. Rückstrahler nach Anspruch 1,
**dadurch gekennzeichnet, daß** die Trägerringscheibe (7) und die Rückstrahlerringscheibe (13) parallel zueinander verlaufen.

3. Rückstrahler nach Anspruch 1 oder 2,
**dadurch gekennzeichnet, daß** die Trägerringscheibe (7) und die Rückstrahlerringscheibe (13) gleiche Breite haben.

4. Rückstrahler nach einem der Ansprüche 1 bis 3,
**dadurch gekennzeichnet, daß** die Rückstrahlerringscheibe (13) auf den Leuchtmitteln (8, 9) befestigt ist.

5. Rückstrahler nach einem der Ansprüche 1 bis 3,
**dadurch gekennzeichnet, daß** die Rückstrahlerringscheibe (13) auf der Trägerringscheibe (7) befestigt ist und vorteilhaft Abstand von ihr hat.

6. Rückstrahler nach einem der Ansprüche 1 bis 5,
**dadurch gekennzeichnet, daß** die Leuchtmittel (8, 9) in Reihen längs des Umfanges der Trägerringscheibe (7) angeordnet und vorteilhaft in den Reihen, in Radialrichtung der Trägerringscheibe (7) gesehen, hintereinander angeordnet sind.

7. Rückstrahler nach einem der Ansprüche 1 bis 6,
**dadurch gekennzeichnet, daß** die Leuchtmittel (8, 9) längs des äußeren und des inneren Randes (22, 23) der Trägerringscheibe (7) angeordnet sind.

8. Rückstrahler nach einem der Ansprüche 1 bis 7,
**dadurch gekennzeichnet, daß** die Leuchtmittel (8, 9) in entgegengesetzte Richtung abstrahlen, und daß vorteilhaft die von den Leuchtmitteln (8, 9) ausgesandten Strahlen (11, 12) etwa parallel zur Oberseite (10) der Trägerringscheibe (7) verlaufen.

9. Rückstrahler nach einem der Ansprüche 1 bis 8,
**dadurch gekennzeichnet, daß** der Reflektorring (1) die Trägerringscheibe (7) radial innen und außen umgibt.

10. Rückstrahler nach einem der Ansprüche 1 bis 9,
**dadurch gekennzeichnet, daß** der Reflektorring (1) die Rückstrahlerringscheibe (13) radial innen und außen umgibt.

11. Rückstrahler nach einem der Ansprüche 1 bis 10,
**dadurch gekennzeichnet, daß** der Reflektorring (1) zwei ringförmige, vorteilhaft paraboloidförmige Reflektorflächen (2, 3) aufweist, an denen die von den Leuchtmitteln (8, 9) ausgesandten Strahlen (11, 12) nach außen reflektiert werden.

12. Rückstrahler nach Anspruch 11,
**dadurch gekennzeichnet, daß** die äußere Reflektorfläche (2) den Leuchtmitteln (8) zugeordnet ist, die längs des äußeren Randes (22) der Trägerringscheibe (7) angeordnet sind.

13. Rückstrahler nach Anspruch 11 oder 12,
**dadurch gekennzeichnet, daß** die innere Reflektorfläche (3) den Leuchtmitteln (9) zugeordnet ist, die längs des inneren Randes (23) der Trägerringscheibe (7) angeordnet sind.

14. Rückstrahler nach einem der Ansprüche 11 bis 13,
**dadurch gekennzeichnet, daß** die beiden Reflektorflächen (2, 3) die Rückstrahlerringscheibe (13) überragen.

15. Rückstrahler nach einem der Ansprüche 11 bis 14,
**dadurch gekennzeichnet, daß** die äußere Reflektorfläche (2) die innere Reflektorfläche (3) überragt.

16. Rückstrahler nach einem der Ansprüche 11 bis 15,
**dadurch gekennzeichnet, daß** die beiden Reflektorflächen (2, 3) durch einen Ringboden (4) miteinander verbunden sind, und daß vorteilhaft die Trägerringscheibe (7) auf dem Ringboden (4) befestigt ist.

17. Rückstrahler nach einem der Ansprüche 11 bis 16,
**dadurch gekennzeichnet, daß** die innere Reflektorfläche (3) in eine zentrisch liegende Spitze (16) ausläuft und vorteilhaft teilweise lichtdurchlässig ist.

18. Rückstrahler nach einem der Ansprüche 11 bis 17,
**dadurch gekennzeichnet, daß** die innere Reflektorfläche (3) wenigstens ein weiteres Leuchtmittel (14) übergreift, und daß vorteilhaft die innere Reflektorfläche (3) im Strahlbereich des weiteren Leuchtmittels (14) lichtdurchlässig ist.

19. Rückstrahler nach einem der Ansprüche 11 bis 16 oder 18,
**dadurch gekennzeichnet, daß** die innere Reflektorfläche (3) an eine zentrisch liegende Lichtdurchtrittsfläche (6) anschließt und daß vorteilhaft hinter der Lichtdurchtrittsfläche (6) wenigstens ein weiteres Leuchtmittel (14) angeordnet ist.

20. Rückstrahler nach einem der Ansprüche 1 bis 19,
**dadurch gekennzeichnet, daß** die Leuchtmittel (8, 9) zwischen der Trägerringscheibe (7) und der Rückstrahlerringscheibe (13) liegen:

21. Rückstrahler nach einem der Ansprüche 1 bis 20,
**dadurch gekennzeichnet, daß** im Bereich zwischen den Leuchtmitteln (8, 9) an der Trägerringscheibe (7) weitere Leuchtmittel (18) vorgesehen sind, denen vorteilhaft wenigstens eine Linsenstruktur (17) an der Rückstrahlerringscheibe (13) zugeordnet ist, die vorzugsweise an der der Trägerringscheibe (7) zugewandten Seite der Rückstrahlerringscheibe (13) vorgesehen ist.

22. Rückstrahler nach Anspruch 21,
**dadurch gekennzeichnet, daß** die weiteren Leuchtmitteln (18) eine andere Strahlrichtung haben als die anderen Leuchtmittel (8, 9) der Trägerringscheibe (7).

23. Rückstrahler nach einem der Ansprüche 1 bis 19, 21 oder 23,
**dadurch gekennzeichnet, daß** die Leuchtmittel (8, 9) an der dem Ringboden (4) des Ringreflektors (1) zugewandten Seite (25) der Trägerringscheibe (7) angeordnet sind.

24. Rückstrahler nach einem der Ansprüche 1 bis 23,
**dadurch gekennzeichnet, daß** die Leuchtmittel (8, 9, 14, 18) unterschiedlichen Leuchtfunktionen zugeordnet sind.

## Claims

1. Reflex reflector for tail-lights of vehicles, preferably of motor vehicles with approximately radially emitting lamps (8, 9), preferably LEDs, which are provided on a ring-shaped support (7) and whose rays (11) are reflected outwards by a reflector ring (1) and which are covered transversely to their beam direction at least partially and with a retroreflective element (13),
**characterised in that** the support (7) and the retroreflective element (13) are formed as flat ring discs and that the lamps (8, 9) are provided at a broadside of the support ring disc (7).

2. Reflex reflector according to claim 1,
**characterised in that** the support ring disc (7) and the retroreflective ring disc (13) are parallel to each other.

3. Reflex reflector according to claim 1 or 2,
**characterised in that** the support ring disc (7) and the retroreflective ring disc (13) have the same width.

4. Reflex reflector according to one of the claims 1 to 3,
**characterised in that** the retroreflective ring disc (13) is fixed onto the lamps (8, 9).

5. Reflex reflector according to one of the claims 1 to 3,
**characterised in that** the retroreflective ring disc (13) is fixed onto the support ring disc (7) and advantageously has a distance to it.

6. Reflex reflector according to one of the claims 1 to 5,
**characterised in that** the lamps (8, 9) are disposed in lines lengthwise to the perimeter of the support ring disc (7) and advantageously are disposed in lines, viewed in radial direction of the support ring disc (7).

7. Reflex reflector according to one of the claims 1 to 6,
**characterised in that** the lamps (8, 9) are disposed lengthwise the outer and inner border (22, 23) of the support ring disc (7).

8. Reflex reflector according to one of the claims 1 to 7,
**characterised in that** the lamps (8, 9) emit in the opposite direction and that advantageously the rays (11, 12), emitted by the lamps (8, 9) proceed approximately parallel to the top side (10) of the support ring disc (7).

9. Reflex reflector according to one of the claims 1 to 8,
**characterised in that** the reflector ring (1) surrounds the support ring disc (7) radially internally and externally.

10. Reflex reflector according to one of the claims 1 to 9,
**characterised in that that** the reflector ring (1) surrounds the retroreflective ring disc (13) radially inwardly and outwardly.

11. Reflex reflector according to one of the claims 1 to 10,
**characterised in that** the reflector ring (1) comprises two ring-shaped, advantageously paraboloid-shaped reflector surfaces (2, 3), at which the rays (11, 12), emitted by the lamps (8, 9) are reflected outwardly.

12. Reflex reflector according to claim 11,
**characterised in that** the outer reflector area (2) is allocated to the lamps (8), which are disposed lengthwise to the outer border (22) of the support ring disc (7).

13. Reflex reflector according to claim 11 or 12,
**characterised in that** the inner reflector area (3) is allocated to the lamps (9), which are disposed lengthwise to the inner border (23) of the support ring disc (7).

14. Reflex reflector according to one of the claims 11 to 13,
**characterised in that** both reflector areas (2, 3) jut out over the reflector ring disc (13).

15. Reflex reflector according to one of the claims 11 to 14,
**characterised in that** the outer reflector area (2) juts out over the inner reflector area (3).

16. Reflex reflector according to one of the claims 11 to 15,
**characterised in that** both reflector areas (2,3) are interconnected by a ring bottom (4) and that the support ring disc (7) is fixed advantageously onto the ring bottom (4).

17. Reflex reflector according to one of the claims 11 to 16,
**characterised in that** the inner reflector area (3) runs out to a centrically positioned spike (16) and is advantageously partially transparent.

18. Reflex reflector according to one of the claims 11 to 17,
**characterised in that** the inner reflector area (3) covers at least one additional lamp (14) and that advantageously the inner reflector area (3) is transparent within the beam zone of the additional lamp (14).

19. Reflex reflector according to one of the claims 11 to 16 or 18,
**characterised in that** the inner reflector area (3) adjoins to the centrically positioned light transmission area (6) and that advantageously behind the light transmission area (6) there is disposed at least one further lamp (14).

20. Reflex reflector according to one of the claims 1 to 19,
**characterised in that** the lamps (8, 9) are disposed beween the support ring disc (7) and the retroreflexive ring disc (13).

21. Reflex reflector according to one of the claims 1 to 20,
**characterised in that** within the zone between the lamps (8, 9) and the support ring disc (7) further lamps (18) are provided, to which is allocated at least one lens structure (17) at the retroreflexive ring disc (13), which is provided preferably at the side directed toward the support ring disc (7) of the retroreflexive ring disc (13).

22. Reflex reflector according to claim 21,
**characterised in that** the further lamps (18) have another beam direction than the other lamps (8, 9) of the support ring disc (7).

23. Reflex reflector according to one of the claims 1 to 19, 21 or 23,
**characterised in that** the lamps (8, 9) are disposed at the side (25) of the support ring disc (7) is directed towards the ring bottom (4) of the ring reflector (1).

24. Reflex reflector according to one of the claims 1 to 23,
**characterised in that** the lamps (8, 9, 14, 18) are assigned to different luminous functions.

## Revendications

1. Dispositif rétro-réfléchissant pour feux arrières de véhicules, de préférence de véhicules automobiles, comprenant des moyens lumineux (8, 9) émettant leur rayonnement de manière sensiblement radiale, de préférence des LED (diodes électroluminescentes), qui sont prévus sur un support (7) de forme annulaire, dont les rayons (11) sont réfléchis vers l'extérieur par un anneau de réflecteur (1), et qui sont masqués au moins en partie transversalement à leur direction de rayonnement, le dispositif comprenant également un élément rétro-réfléchissant (13),
**caractérisé en ce que** le support (7) et l'élément rétro-réfléchissant (13) sont réalisés sous forme de disques annulaires plats, et **en ce que** les moyens lumineux (8, 9) sont prévus sur un côté de grande largeur du disque annulaire de support (7).

2. Dispositif rétro-réfléchissant selon la revendication 1, **caractérisé en ce que** le disque annulaire de support (7) et le disque annulaire rétro-réfléchissant (13) s'étendent parallèlement l'un par rapport à l'autre.

3. Dispositif rétro-réfléchissant selon la revendication 1 ou 2, **caractérisé en ce que** le disque annulaire de support (7) et le disque annulaire rétro-réfléchissant (13) ont une largeur identique.

4. Dispositif rétro-réfléchissant selon l'une des revendications 1 à 3, **caractérisé en ce que** le disque annulaire rétro-réfléchissant (13) est fixé sur les moyens lumineux (8, 9).

5. Dispositif rétro-réfléchissant selon l'une des revendications 1 à 3, **caractérisé en ce que** le disque annulaire rétro-réfléchissant (13) est fixé sur le disque annulaire de support (7) et est avantageusement situé à distance de celui-ci.

6. Dispositif rétro-réfléchissant selon l'une des revendications 1 à 5, **caractérisé en ce que** les moyens lumineux (8, 9) sont agencés en rangées le long de la périphérie du disque annulaire de support (7), et avantageusement les uns derrière les autres dans les rangées, vus dans la direction radiale du disque annulaire de support (7).

7. Dispositif rétro-réfléchissant selon l'une des revendications 1 à 6, **caractérisé en ce que** les moyens lumineux (8, 9) sont agencés le long du bord extérieur et du bord intérieur (22, 23) du disque annulaire de support (7).

8. Dispositif rétro-réfléchissant selon l'une des revendications 1 à 7, **caractérisé en ce que** les moyens lumineux (8, 9) rayonnent dans des directions opposées, et **en ce que** les rayons (11, 12) émis par les moyens lumineux (8, 9) s'étendent avantageusement parallèlement à la face supérieure (10) du disque annulaire de support (7).

9. Dispositif rétro-réfléchissant selon l'une des revendications 1 à 8, **caractérisé en ce que** l'anneau de réflecteur (1) entoure le disque annulaire de support (7) radialement à l'intérieur et radialement à l'extérieur.

10. Dispositif rétro-réfléchissant selon l'une des revendications 1 à 9, **caractérisé en ce que** l'anneau de réflecteur (1) entoure le disque annulaire rétro-réfléchissant (13) radialement à l'intérieur et radialement à l'extérieur.

11. Dispositif rétro-réfléchissant selon l'une des revendications 1 à 10, **caractérisé en ce que** l'anneau de réflecteur (1) présente deux surfaces de réflecteur (2, 3) de forme annulaire, avantageusement en forme de paraboloïde, sur lesquelles les rayons (11, 12) émis par les moyens lumineux (8, 9) sont réfléchis vers l'extérieur.

12. Dispositif rétro-réfléchissant selon la revendication 11, **caractérisé en ce que** la surface de réflecteur extérieure (2) est associée aux moyens lumineux (8) qui sont agencés le long du bord extérieur (22) du disque annulaire de support (7).

13. Dispositif rétro-réfléchissant selon la revendication 11 ou 12, **caractérisé en ce que** la surface de réflecteur intérieure (3) est associée aux moyens lumineux (9) qui sont agencés le long du bord intérieur (23) du disque annulaire de support (7).

14. Dispositif rétro-réfléchissant selon l'une des revendications 11 à 13, **caractérisé en ce que** les deux surfaces de réflecteur (2, 3) dépassent en hauteur le disque annulaire rétro-réfléchissant (13).

15. Dispositif rétro-réfléchissant selon l'une des revendications 11 à 14, **caractérisé en ce que** la surface de réflecteur extérieure (2) dépasse en hauteur la surface de réflecteur intérieure (3).

16. Dispositif rétro-réfléchissant selon l'une des revendications 11 à 15, **caractérisé en ce que** les deux surfaces de réflecteur (2, 3) sont reliées l'une à l'autre par un fond annulaire (4), et **en ce que** le disque annulaire de support (7) est avantageusement fixé sur le fond annulaire (4).

17. Dispositif rétro-réfléchissant selon l'une des revendications 11 à 16, **caractérisé en ce que** la surface de réflecteur intérieure (3) se termine en une pointe (16) en position centrale, et est avantageusement en partie transparente à la lumière.

18. Dispositif rétro-réfléchissant selon l'une des revendications 11 à 17, **caractérisé en ce que** la surface de réflecteur intérieure (3) surmonte au moins un moyen lumineux supplémentaire (14), et **en ce que** la surface de réflecteur intérieure (3) est avantageusement transparente à la lumière dans la zone de rayonnement dudit moyen lumineux supplémentaire (14).

19. Dispositif rétro-réfléchissant selon l'une des revendications 11 à 16 ou 18, **caractérisé en ce que** la surface de réflecteur intérieure (3) se raccorde à une surface de passage de lumière (6) en position centrale, et **en ce que** derrière la surface de passage de lumière (6) est avantageusement agencé au moins un moyen lumineux supplémentaire(14).

20. Dispositif rétro-réfléchissant selon l'une des revendications 1 à 19, **caractérisé en ce que** les moyens lumineux (8, 9) sont placés entre le disque annulaire de support (7) et le disque annulaire rétro-réfléchissant (13).

21. Dispositif rétro-réfléchissant selon l'une des revendications 1 à 20, **caractérisé en ce que** dans la zone entre les moyens lumineux (8, 9) sur le disque annulaire de support (7), sont prévus des moyens lumineux supplémentaires (18) auxquels est avantageusement associée sur le disque annulaire rétro-réfléchissant (13), au moins une structure de lentille (17) prévue de préférence sur la face du disque annulaire rétro-réfléchissant (13), qui est dirigée vers le disque annulaire de support (7).

22. Dispositif rétro-réfléchissant selon la revendication 21, **caractérisé en ce que** lesdits moyens lumineux supplémentaires (18) ont une direction de rayonnement différente de celle des autres moyens lumineux (8, 9) du disque annulaire de support (7).

23. Dispositif rétro-réfléchissant selon l'une des revendications 1 à 19, 21 ou 23, **caractérisé en ce que** les moyens lumineux (8, 9) sont agencés sur la face (25) du disque annulaire de support (7), qui est dirigée vers le fond annulaire (4) du réflecteur annulaire (1).

24. Dispositif rétro-réfléchissant selon l'une des revendications 1 à 23, **caractérisé en ce que** les moyens lumineux (8, 9, 14, 18) sont affectés à différentes fonctions d'éclairage.
